# EUROPÄISCHE PATENTSCHRIFT

(11) **EP 1 476 793 B1**
(45) Veröffentlichungstag und Bekanntmachung des Hinweises auf die Patenterteilung: **27.03.2013**
(21) Anmeldenummer: 03709638.5
(22) Anmeldetag: 21.02.2003
(51) Int. Cl.: G05B 15/02

(54) **VERFAHREN ZUR AUTOMATISCHEN AUFZEICHNUNG EINES EINGRIFFES IN EINE PRODUKTIONSANLAGE**
METHOD FOR AUTOMATICALLY RECORDING AN INTERVENTION IN A PRODUCTION FACILITY
PROCEDE D'ENREGISTREMENT AUTOMATIQUE D'UNE INTERVENTION DANS UNE UNITE DE PRODUCTION

(30) Priorität: 22.02.2002 DE 10207526
(43) Veröffentlichungstag der Anmeldung: 17.11.2004
(73) Patentinhaber: Siemens Aktiengesellschaft, 80333 München (DE)
(72) Erfinder: HAMMON, Harald, 90471 Nürnberg (DE); HÖFLER, Werner, 90542 Eckental (DE)
(86) Internationale Anmeldenummer: PCT/DE2003/000554
(87) Internationale Veröffentlichungsnummer: WO 2003/073186

(56) Entgegenhaltungen:
- DE-A- 19 614 748
- US-A- 4 251 858
- US-B1- 6 295 478
- US-B1- 6 487 462

## Beschreibung

Die Erfindung betrifft ein Verfahren zur automatischen Aufzeichnung eines Eingriffes in eine durch ein Steuerprogramm gesteuerte Produktionsanlage mit einer Mehrzahl von Anlagenkomponenten.

Ein derartiges Verfahren ist bekannt. Ein Eingriff in die Produktionsanlage ist z. B. eine Veränderung der Betriebsart, unter der das Steuerprogramm diese steuert. Ein Steuerprogramm umfasst üblicherweise zumindest zwei unterscheidbare Betriebsarten, nämlich Automatikbetrieb und Handbetrieb. Zusätzlich kann ein so genannter Einrichtbetrieb vorgesehen sein, bei dem teilweise automatische Abläufe aktiviert und andererseits manuelle Eingriffe möglich sind, die im Automatikbetrieb nicht zulässig sind. Ein Umschalten zwischen Automatik- und Handbetrieb ist ein Eingriff in die Produktionsanlage, der vielfach aufgezeichnet und protokolliert wird, um z. B. eine Übersicht über Stillstandszeiten der Produktionsanlage zu erhalten. Des Weiteren kann ein solcher oder ähnlicher Eingriff auch aufgezeichnet werden, um unberechtigte Bedienungen der Produktionsanlage oder Eingriffe in die Produktionsanlage, z. B. bei der Nahrungsmittelproduktion, zu erkennen.

WO 01/50209 A1 offenbart ein Verfahren zur Fertigungsüberwachung mit einer elektronischen Messwerterfassung, wobei eine Vielzahl physikalischer Größen erfasst und ausgewertet werden.

US 6,295,478 B1 beschreibt ein Verfahren zum Wechsel des Ablaufs eines Herstellungsprozesses, wobei eine Vielzahl unterschiedlicher Parameter aufgezeichnet und statistisch ausgewertet werden.

Bisher beziehen sich solche Aufzeichnungen stets auf einen Steuerungsteil der Produktionsanlage und damit nur mittelbar auf die Produktionsanlage selbst. Wenn z. B. ein Bedienelement, wie z. B. ein Schalter zum Umschalten zwischen Hand- und Automatikbetrieb, betätigt wird, hat dies zunächst Auswirkungen auf das Steuerungsprogramm und dessen Betriebsart. Eine Aufzeichnung eines solchen Eingriffes ist vor allem deshalb möglich, weil das Bedienelement Bestandteil des Steuerungsteils der Anlage ist und deshalb ohnehin durch das Steuerprogramm überwacht wird. Nachdem jedes Betätigen des Bedienelementes das Verhalten des Steuerprogramms beeinflusst, stellt es kein Problem dar, derartige Eingriffe zu erkennen und aufzuzeichnen.

Bisher ist jedoch noch kein Verfahren bekannt, mit dem automatisch Eingriffe in die Produktionsanlage selbst erkannt werden können. Die Übersicht, die bisher mögliche, automatisch erzeugte Aufzeichnungen über die Betriebssituation einer Produktionsanlage bieten, ist damit nur unvollständig.

Der Erfindung liegt daher die Aufgabe zugrunde, ein Verfahren anzugeben, mit dem Eingriffe in die Produktionsanlage, die bisher unbemerkt oder verborgen geblieben sind, nunmehr automatisch erkannt werden.

Diese Aufgabe wird erfindungsgemäß mit den Merkmalen des Anspruchs 1 gelöst. Dazu ist bei einem Verfahren der eingangs genannten Art vorgesehen, dass aus dem Steuerprogramm Informationen über einen jeweiligen Zustand einer Anlagenkomponente entnommen werden, dass aus dem Steuerprogramm weiter Informationen darüber entnommen werden, ob dieser Zustand gemäß dem Steuerprogramm besteht oder erfolgt, und dass aufgezeichnet wird, wenn dieser Zustand nicht gemäß dem Steuerprogramm besteht. Als Steuerprogramm werden dabei und im Folgenden sowohl die Gesamtheit der den Programmablauf festlegenden Anweisungen, wie z. B. Sprung- oder Transferbefehle etc., als auch die verwendeten Daten, insbesondere das so genannte Prozessabbild, bezeichnet. Ferner werden ein räumlich oder funktional begrenzter Teil der Anlage als Anlagenteil und jedes Anlagenteil und verbindende Elemente, wie z. B. eine Rohrleitung, aber auch Motoren, Ventile, etc., oder deren Kombination als Anlagenkomponente bezeichnet.

Die Erfindung geht davon aus, dass ein Betreiber einer Produktionsanlage, insbesondere einer verfahrenstechnischen Anlage, wie z. B. einer Anlage für pharmazeutische Produkte oder für die Feinchemie, einer Raffinerie oder einer Anlage zur Lebensmittelherstellung, gegenüber einer Prüfungsbehörde nachweisen muss, dass ein bestimmter Produktionsprozess konsistent ein Produkt produziert, welches bestimmten vorgegebenen Spezifikationen und Qualitätsmerkmalen genügt. Diese Anforderung besteht nicht nur bei der Erstellung der Anlage, sondern auch für den laufenden Betrieb. Deshalb sind sämtliche Eingriffe in die Produktionsanlage aufzuzeichnen. Dies wird heute mit einem so genannten Änderungshauptbuch gelöst. Aus diesem muss jederzeit ersichtlich sein, wer (Bediener) wann (Datum/Uhrzeit) was (Anlagenkomponente) an der Produktionsanlage geändert hat. Ein solches Hauptbuch wird heute manuell geführt. Dazu werden durch den Verantwortlichen im Änderungshauptbuch Änderungen an der Produktionsanlage z. B. anhand der Erinnerung des jeweiligen Bedieners, anhand konkreter Anweisungen an einen Bediener, z. B. eine bestimmte Anlagenkomponente auszutauschen, sowie anhand von Protokollen über den Betriebszustand der Produktionsanlage vermerkt. Dies ist aufwendig und fehleranfällig. Um den Aufwand zu minimieren, werden Eingriffe sehr restriktiv vorgenommen. Dies geht jedoch zu Lasten der Flexibilität und/oder der Effizienz der Produktionsanlage. Neue Erkenntnisse können kaum in die Produktionsanlage selbst oder den Produktionsprozess einfließen. Zudem ist ein derart geführtes Änderungshauptbuch für einen Prüfer einer Prüfungsbehörde nur bedingt vertrauenswürdig, da Manipulationen in Form von Änderungen, Auslassungen und Hinzufügungen weder auszuschließen noch unmittelbar ersichtlich sind. Somit ist eine Prüfung der Produktionsanlage durch die Prüfungsbehörde häufig mit einem erheblichen Aufwand verbunden, weil unabhängig vom Inhalt des Änderungshauptbuches die komplette Produktionsanlage eingehender Untersuchungen unterzogen wird.

Der Vorteil der Erfindung besteht darin, dass Bedienungen der Produktionsanlage zweifelsfrei auf Änderungen an der Produktionsanlage zurückgeführt werden und daraus die jeweilige Änderung an der Produktionsanlage erkannt werden kann. Dies ermöglicht eine umfassende Dokumentation des Betriebszustandes der Produktionsanlage.

Die abhängigen Ansprüche sind auf bevorzugte Ausführungsformen der vorliegenden Erfindung gerichtet.

Wenn der Zustand und/oder die davon betroffene Anlagenkomponente aufgezeichnet wird, kann ein Äquivalent zum bisherigen Änderungshauptbuch vollautomatisch entstehen. Die betroffene Anlagenkomponente wird dabei gemäß einer vorgebbaren oder vorgegebenen Regel, die insbesondere in einer Regeldatenbank hinterlegt ist, ermittelt.

Wenn das Aufzeichnen eine Bestätigung durch den jeweiligen Bediener erfordert, lässt sich zu einem späteren Zeitpunkt nachvollziehen, wer zu dem Zeitpunkt, zu dem der Zustand erkannt oder aufgezeichnet wurde, in der Produktionsanlage tätig war. Dies ist für eventuelle zusätzliche Auskünfte zur manuellen, nachträglichen Ergänzung der gesammelten Daten nützlich. Außerdem ist jederzeit nachvollziehbar, ob ein erfolgter Eingriff durch berechtigtes Personal vorgenommen wurde. Dies ist nützlich, um z. B. dokumentieren zu können, dass ein erfolgter Eingriff durch sachkundiges Personal vorgenommen wurde.

Wenn es zur Bestätigung durch den Bediener einer elektronisch auswertbaren Authentifizierung des Bedieners bedarf, ist eine "Sicherheitskette" bei der vollautomatischen Erstellung des Änderungshauptbuches geschlossen. Einerseits werden Eingriffe in die Produktionsanlage automatisch erkannt und ebenfalls automatisch ein entsprechender Eintrag im Äquivalent des Änderungshauptbuches generiert. Andererseits wird anhand einer elektronisch auswertbaren Authentifizierung des Bedieners automatisch ein zugeordneter Eintrag generiert, anhand dessen erkennbar ist, wer zu dem Zeitpunkt, zu dem der Eingriff erkannt oder aufgezeichnet wurde, in der Produktionsanlage tätig war. Beide Einträge sind nicht veränderbar, ohne dass dies ersichtlich wäre. Damit ist eine lückenlose Dokumentation der Vorgänge in der Produktionsanlage gewährleistet. Der Betreiber der Produktionsanlage kann der Prüfungsbehörde ein Dokument, das elektronische Äquivalent des Änderungshauptbuches, vorlegen, aus dem jeder Eingriff in die Produktionsanlage hervorgeht. Ein derart automatisch erstelltes Dokument lässt sich nur mit erheblichem Aufwand widerrechtlich verfälschen. Daher besteht die Möglichkeit, dass ein ersichtlich nicht verfälschtes Dokument von der Prüfungsbehörde akzeptiert wird und dass der Umfang regelmäßiger Prüfungen damit erheblich verringert wird und diese damit beschleunigt werden.

Wenn bei einem insbesondere kontinuierlichen Produktionsprozess aus mindestens einem Ausgangsstoff zumindest ein Produkt erzeugt wird, wobei zur Erzeugung des Produktes der oder jeder Ausgangsstoff durch zumindest eine Leitung mit jeweils einem insbesondere abriegelbaren, vorderen und hinteren Knotenpunkt geleitet wird, wobei die oder jede Leitung an einem oder jedem Knotenpunkt mit zumindest einer anderen Leitung zusammentrifft, wird die Produktionsanlage zu einem wesentlichen Teil durch ein Netzwerk von Leitungen gebildet. Die Leitungen verbinden als Anlagenkomponenten einzelne Anlagenteile untereinander. Es ist wichtig, jeden Eingriff in dieses Netzwerk zu erkennen, weil z. B. durch das Öffnen eines Knotenpunktes, einer Verbindung zweier Leitungen, Schadstoffe in das Leitungssystem gelangen können. Wenn daher weiter eine Leitungstopologie Informationen über jede Leitung, ihre Knotenpunkte und Verbindungen mit weiteren Leitungen enthält und aus dem Steuerprogramm Informationen darüber entnommen werden, welcher Knotenpunkt zu welchem Zeitpunkt abgeriegelt ist, d. h. durch welche Leitung zu welchem Zeitpunkt ein Ausgangsstoff geleitet wird, und ferner aus dem Steuerprogramm Informationen darüber entnommen werden, ob diese Abriegelung gemäß dem Steuerprogramm besteht oder erfolgt, kann ermittelt werden, auf welche Leitung oder Leitungen sich ein Eingriff in die Produktionsanlage bezieht.

Die Leitungstopologie kann leicht - analog zu Straßen und Wegen für z. B. ein Routenplanungsprogramm - mit Hilfe von so genannten Graphen, insbesondere so genannten gerichteten Graphen abgebildet werden.

Die Bezeichnung "gemäß dem Steuerprogramm" bezieht sich dabei und im Folgenden insbesondere auf den Automatikbetrieb des Steuerprogramms. Es werden also Abriegelungen, die gemäß dem durch das Steuerprogramm automatisch gesteuerten Ablauf erfolgen oder bestehen, nicht berücksichtigt, wohl aber solche Abriegelungen, die nicht durch den momentanen Status des Produktionsprozesses veranlasst sind. Diese Unterscheidung ist notwendig, weil auch solche Abriegelungen durchaus unter Kontrolle des Steuerprogramms erfolgen können, nämlich wenn z. B. ein Anlagenteil auf Einrichtbetrieb umgeschaltet wird und die jeweilige Abriegelung durch Betätigung entsprechender Bedienelemente veranlasst wird. Solche Eingriffe, wie z. B. das Abriegeln einer Leitung, werden im Folgenden als "unerwartet" bezeichnet.

Vorteilhaft wird ein unerwartetes - d. h. z. B. manuell oder nicht gemäß dem Steuerprogramm erfolgtes - Sperren zumindest zweier Knotenpunkte als Austausch der oder jeder dazwischen liegenden Leitung ausgewertet und entsprechend aufgezeichnet.

Das unerwartete Sperren zweier Knotenpunkte ist dabei eine Bedingung in einer aus Bedingung und Ergebnis zusammengesetzten Regel. Das zugehörige Ergebnis ist hier die Annahme eines Austauschs der oder jeder zwischen den Knotenpunkten liegenden Leitung.

Weiter vorteilhaft wird eine unerwartete Deaktivierung eines Anlagenteils, zu dem der oder jeder gesperrte Knotenpunkt und/oder die oder jede dazwischen liegende Leitung gehört, aufgezeichnet und insbesondere als Austausch der oder jeder entsprechenden Leitung ausgewertet und/oder aufgezeichnet. Eine hinsichtlich des Produktionsprozesses erfolgte, insbesondere unerwartete Deaktivierung eines Anlagenteils erweitert die Bedingung der oben genannten Regel. Die Regel lautet damit z. B. "Wenn zwei Knotenpunkte (unerwartet) gesperrt sind und der Anlagenteil, in dem sich diese Knotenpunkte befinden, (unerwartet) deaktiviert wurde, wird dies als Austausch der oder jeder zwischen den Knotenpunkten verlaufenden Leitung ausgewertet".

Vorteilhaft können auch Eingriffe in Bezug auf Fördermittel, wie z. B. Motoren, die zur Bewegung eines Ausgangsstoffes in einer Leitung vorgesehen sind, erkannt werden. Dazu ist vorgesehen, dass, wenn mit zumindest einer Leitung ein Fördermittel kombiniert ist und ein unerwartetes Sperren zweier die Leitung mit dem Fördermittel einschließender Knotenpunkte erfolgt, dies als Austausch des Fördermittels und/oder der mit dem Fördermittel kombinierten Leitung ausgewertet und/oder entsprechend aufgezeichnet wird.

Weiter vorteilhaft kann, wenn für zumindest eine Leitung eine Reinigung veranlasst werden kann, eine unerwartete Reinigung einer Leitung als zuvor erfolgter Austausch der Leitung ausgewertet und/oder entsprechend aufgezeichnet werden. Dies entspricht einer zusätzlichen Regel, die z. B. lautet: "Wenn (unerwartet) eine Reinigung einer Anlagenkomponente, einer Leitung oder eines Leitungssegmentes erfolgt, wird dies als Austausch der von der Reinigung betroffenen Anlagenkomponente ausgewertet".

Entsprechend kann, wenn für zumindest eine Leitung eine Druckprüfung veranlasst werden kann, eine unerwartete Druckprüfung einer Leitung als zuvor erfolgter Austausch der Leitung ausgewertet und/oder entsprechend aufgezeichnet werden. Auch dies entspricht einer zusätzlichen Regel, die z. B. lautet: "Wenn (unerwartet) eine Druckprüfung einer Anlagenkomponente, einer Leitung oder eines Leitungssegmentes erfolgt, wird dies als Austausch der von der Druckprüfung betroffenen Anlagenkomponente ausgewertet".

Schließlich kann jede Bedingung einer Regel mit einer Fehler- oder Wartungsmeldung verknüpft werden, so dass das Aufzeichnen erst erfolgt, wenn vorher, d. h. vor dem unerwarteten Eingriff, eine Fehler- oder Wartungsmeldung ausgelöst war. Eine Kombination des Anstehens einer Fehler- oder Wartungsmeldung mit z. B. einer der oben genannten Bedingungen ist sinnvoll, weil Eingriffen in die Produktionsanlage, vor allem berechtigten Eingriffen in die Produktionsanlage, in der Regel eine Ausnahmesituation vorangeht, die dem Bedienpersonal durch die Fehler-, Warn- oder Wartungsmeldung angezeigt wird. Mit dem Eingriff in die Produktionsanlage versucht das Bedienpersonal die Ausnahmesituation zu beseitigen, so dass der Produktionsprozess fortgesetzt werden kann. Die dazu notwendigen Eingriffe werden gemäß der Erfindung erkannt und insbesondere aufgezeichnet.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Darin zeigen:
- FIG 1: eine Produktionsanlage mit einem Automatisierungssystem und
- FIG 2: den Ablauf des Verfahrens zur automatischen Aufzeichnung eines Eingriffes in die Produktionsanlage.

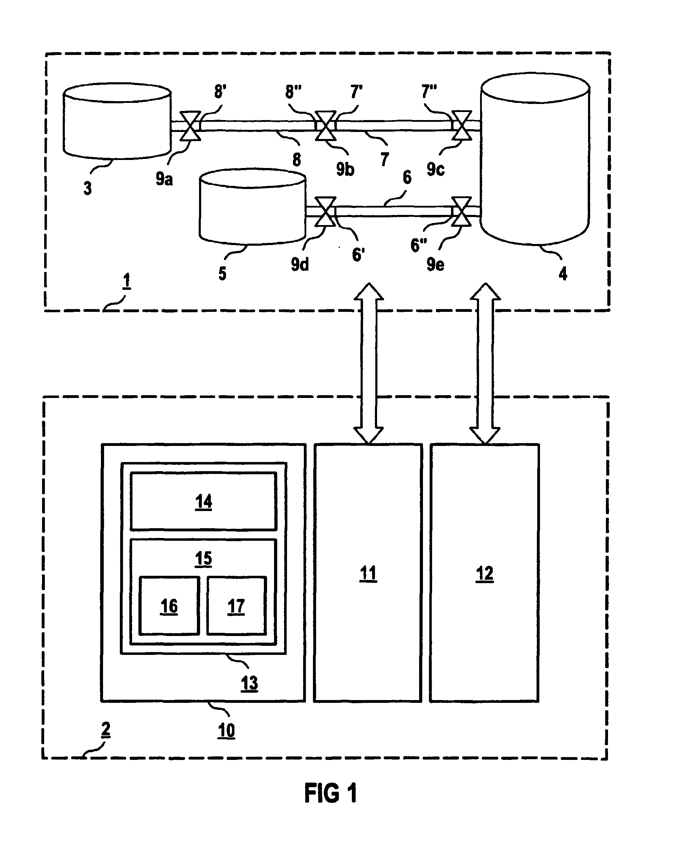

FIG 1 zeigt eine vereinfachte Produktionsanlage 1 und ein Blockschaltbild eines Automatisierungssystems 2. Die Produktionsanlage 1 umfasst einen ersten Behälter 3 z. B. für einen Ausgangsstoff, einen Reaktor 4 und einen zweiten Behälter 5 z. B. für ein Produkt. Die beiden Behälter 3, 5 und der Reaktor 4 werden jeweils kurz als Anlagenteil 3, 4, 5 bezeichnet. Jeder Anlagenteil 3 - 5 ist mit einem anderen Anlagenteil 3 - 5 durch zumindest eine Leitung 6, 7, 8, hier eine Rohrleitung 6, 7, 8, verbunden. Jede Leitung 6 - 8 hat eine vordere und eine hintere Öffnung 6', 7', 8', 6", 7", 8", im Folgenden zusammenfassend kurz als Knotenpunkt 6', 7', 8', 6", 7", 8" bezeichnet. An jedem Knotenpunkt 6' - 8', 6" - 8" besteht die Möglichkeit, eine Leitung 6 - 8 mit einer anderen Leitung 6 - 8 oder einem Anlagenteil 3 - 5 zu verbinden. Um eine Leitung 6 - 8 abzuriegeln, sind an einem oder jedem Knotenpunkt 6' - 8', 6" - 8" Ventile 9a, 9b, 9c, 9d, 9e vorgesehen. Anlagenteile 3 - 5, Leitungen 6 - 8 und Ventile 9a - 9e werden im Folgenden zusammenfassend jeweils als Anlagenkomponenten 3 - 5, 6 - 8, 9a - 9e - oder kurz als Komponenten 3 - 5, 6 - 8, 9a - 9e - bezeichnet.

Das Automatisierungssystem 2 steuert einen auf der Produktionsanlage 1 ablaufenden Produktionsprozess. Das Automatisierungssystem 2 umfasst dazu eine Steuerung 10, z. B. eine so genannte speicherprogrammierbare Steuerung 10 (SPS), sowie Ein- und Ausgabemittel 11, 12 zum Ausgeben von Steuerinformationen an die Produktionsanlage 1 und zum Einlesen von Statusinformationen von der Produktionsanlage 1 (verdeutlicht durch die Doppelpfeile). Die Steuerung 10 weist einen Speicher 13 auf. Im Speicher 13 sind in an sich bekannter Weise ein Steuerprogramm 14 zur Steuerung und/oder Überwachung des Produktionsprozesses sowie Daten 15, auf die das Steuerprogramm zu diesem Zweck zugreift, insbesondere das so genannte Prozessabbild, gespeichert.

Um die Leitung 6 zwischen Reaktor 4 und zweitem Behälter 5 abzuriegeln, müssen die beiden die Leitung 6 einschließenden Ventile 9d, 9e geschlossen werden. Dazu werden mittels des Steuerprogramms 14 entsprechende Ausgangsvariablen belegt. Im Datenbereich 15 sind dazu Daten angelegt, die in Kombination den aktuellen Zustand der Produktionsanlage 1 repräsentieren. Man unterscheidet einen Eingangsspeicherbereich 16 und einen Ausgangsspeicherbereich 17. Eingangsspeicherbereich 16 und Ausgangsspeicherbereich 17 bilden zusammen das Prozessabbild. Der Eingangsspeicherbereich 16 umfasst alle aus dem Produktionsprozess aufgenommenen Daten. Der Ausgangsspeicherbereich 17 umfasst alle an den Produktionsprozess auszugebenden Daten. Jede ansteuerbare oder jede durch das Steuerprogramm 14 angesteuerte Komponente 9a - 9e der Produktionsanlage 1 hat im Ausgangsspeicherbereich 17 in an sich bekannter Art ihre eindeutige Entsprechung. Bei einer Komponente 9a - 9e, die wie ein Ventil 9a - 9e nur zwei Zustände - offen, geschlossen - annehmen kann, ist diese oder deren Zustand im Ausgangsspeicherbereich 17 durch ein Bit - High, Low - abgebildet. Zum Schließen der beiden Ventile 9d, 9e wird demnach das jeweils entsprechende Bit im Ausgangsspeicherbereich 17 geeignet belegt. Durch die Steuerung 10 wird zyklisch der gesamte Inhalt des Ausgangsspeicherbereiches 17 an die Produktionsanlage 1 ausgegeben. Dies geschieht mit Hilfe des oder der Ausgabemittel 12. Ein geeignetes Ausgabemittel 12 ist z. B. eine Digitalausgabebaugruppe.

Wenn die Ventile 9d, 9e angesteuert werden, wird die dazwischen verlaufende Leitung 6 abgeriegelt. Wenn das Schließen der Ventile 9d, 9e abgeschlossen ist, wird dies als Zustand des Produktionsprozesses durch das Automatisierungssystem 2 aufgenommen. Zustände des Prozesses und damit aus dem Prozess aufgenommene Daten bilden die Eingänge. Jeder Einzelzustand des Prozesses wird in einem dafür vorgesehenen Abschnitt des Eingangsspeicherbereiches 16 zwischengespeichert. Ein einfacher Zustand wird in einem dafür vorgesehenen Bit eines Bytes des Eingangsspeicherbereiches 16 gespeichert. Komplexere Zustände, wie etwa analoge Messwerte (Temperatur, Gewicht, Füllwert), werden in einem dafür vorgesehenen zusammenhängenden Bereich des Eingangsspeicherbereiches 16, z. B. einem Byte, einem Wort oder einem Langwort, gespeichert. Die Referenzierung einer solchen Position oder eines solchen Bereiches des Eingangsspeicherbereiches 16 wird durch eine bekannte entsprechende Variablendeklaration erleichtert.

Für jedes Ventil 9a - 9d können im Eingangsspeicherbereich 16 jeweils zwei Bit vorgesehen sein. Das erste Bit speichert, ob das Ventil 9a - 9d geöffnet ist - ja, nein - und das zweite Bit speichert, ob das Ventil 9a - 9e geschlossen ist - ja, nein. Nach dem Schließen der beiden Ventile 9d, 9e ist dies anhand der jeweiligen Zustände der entsprechenden Bits des Eingangsspeicherbereiches 16 erkennbar.

Nun soll vorausgesetzt werden, dass es während der automatischen Steuerung des Produktionsprozesses keinen Zeitpunkt gibt, zu dem beide Ventile 9d, 9e geschlossen sind. Diese Ventile 9d, 9e sind zur Abriegelung der Leitung 6, die Reaktor 4 und zweiten Behälter 5 miteinander verbindet, geeignet. Im Produktionsprozess ist gemäß der Voraussetzung zu jedem beliebigen Zeitpunkt der automatischen Steuerung maximal eines der beiden Ventile 9d, 9e geschlossen. Z. B. ist das dem Reaktor 4 zugewandte Ventil 9e geschlossen, solange im Reaktor 4 eine kontrollierte Reaktion stattfindet. Das Ventil 9e wird geöffnet, wenn die Reaktion beendet ist und das Reagens als Endprodukt in den zweiten Behälter 5 geleitet wird. Das dem zweiten Behälter 5 zugewandte Ventil 9d ist geschlossen, wenn sich das Produkt im Behälter 5 befindet. Das Ventil 9d wird wieder geöffnet, wenn das Produkt aus dem Behälter 5 abgezogen ist und der Behälter 5 für eine erneute Befüllung bereitsteht.

Wenn die Leitung 6 z. B. schadhaft geworden ist und deshalb ausgetauscht werden muss, sind dafür beide Ventile 9d, 9e zu schließen, weil sonst aus dem Reaktor 4 oder dem Behälter 5 Stoffe austreten oder in diese z. B. Verunreinigungen gelangen könnten. Das Schließen beider Ventile 9d, 9e kommt gemäß obiger Voraussetzung im Automatikbetrieb nicht vor. Damit steht, sobald bei beiden Ventilen 9d, 9e der Zustand "Geschlossen" erkannt wird, fest, dass ein Eingriff in die Produktionsanlage 1 vorgenommen wurde.

Um dies zu erkennen, werden aus dem Steuerprogramm 14 und den zugehörigen Daten 15 Informationen über einen jeweiligen Zustand der Produktionsanlage 1 und/oder eines Anlagenteils 3, 4, 5 entnommen; dabei wird u.a. erkannt, dass beide Ventile 9d, 9e geschlossen sind. Dann werden dem Steuerprogramm 14 Informationen darüber entnommen, ob der oder jeder ermittelte Zustand gemäß dem Steuerprogramm 14 besteht; dabei ergibt sich, dass gemäß dem Steuerprogramm 14 niemals beide Ventile 9d, 9e gleichzeitig geschlossen sind. Es ist also zumindest ein Zustand ermittelt worden, der unerwartet, also nicht gemäß dem Steuerprogramm 10 besteht. Dies wird abschließend aufgezeichnet.

Zur Verbesserung der Aussagefähigkeit solcher Aufzeichnungen wird weiter aufgezeichnet, welcher Anlagenteil 3, 4, 5 oder welche Anlagenkomponente 3 - 5, 6 - 8, 9a - 9d von diesem unerwarteten Zustand betroffen ist. Dazu wird zunächst auf die Informationen gebräuchlicher so genannter Anlagenkennzeichen zurückgegriffen. Die Verwendung von Anlagenkennzeichen ist allgemein üblich und dient z. B. dazu, Komponenten in einem ersten Anlagenteil von solchen in einem zweiten Anlagenteil zu unterscheiden. Die Syntax und Struktur von Anlagenkennzeichen ist genormt.

Die beiden unerwartet geschlossenen Ventile 9d, 9e werden mit komplettem Anlagenkennzeichen z. B. wie folgt bezeichnet: "Produktionsanlage_3.Reaktor_1.Ventil_Auslassverriegelung" und "Produktionsanlage_3.Behälter_2.Ventil_Einlassverriegelung". Anhand der Anlagenkennzeichen ist ermittelbar, zu welchem Anlagenteil 3, 4, 5 die Komponenten 9d, 9e mit dem unerwarteten Zustand gehören. Hier gehört das erste unerwartet geschlossene Ventil 9d ("Ventil_Einlassverriegelung") zum Anlagenteil "Behälter_2" 5 und zur Produktionsanlage "Produktionsanlage_3" 1. Des Weiteren gehört das zweite unerwartet geschlossene Ventil 9e ("Ventil_Auslassverriegelung") zum Anlagenteil "Reaktor_1" 4 und gleichfalls zur Produktionsanlage "Produktionsanlage_3" 1. Mit diesen Informationen kann aufgezeichnet werden, auf welche Anlagenteile 3, 4, 5 der Eingriff in die Produktionsanlage 1 Auswirkungen haben kann.

Zur weiteren Verbesserung der Aussagefähigkeit solcher Aufzeichnungen bleibt jetzt noch zu ermitteln, welche Anlagenkomponente 3 - 5, 6 - 8, 9a - 9e von dem unerwarteten Eingriff betroffen ist. Jede Leitung 6, 7, 8 besitzt einen insbesondere abriegelbaren vorderen und hinteren Knotenpunkt 6' - 8', 6" - 8". An jedem Knotenpunkt 6' - 8', 6" - 8" trifft die Leitung 6, 7, 8 mit einer anderen Anlagenkomponente 3 - 5, 6 - 8, 9a - 9e, insbesondere einer anderen Leitung 6, 7, 8, zusammen. Über den Verlauf jeder Leitung 6, 7, 8, ihre Verbindungen untereinander oder mit anderen Anlagenkomponenten 3 - 5, 6 - 8, 9a - 9e sind Informationen in einer Leitungstopologie gespeichert. Wenn also bereits ermittelt ist, dass zwei Ventile 9d, 9e unerwartet geschlossen sind, kann aus der Leitungstopologie entnommen werden, welche Anlagenkomponenten 3 - 5, 6 - 8, 9a - 9e sich zwischen diesen beiden Ventilen 9d, 9e befinden. In diesem Fall lässt sich ermitteln, dass sich zwischen den beiden Ventilen 9d, 9e die Leitung 6 befindet, welche Reaktor 4 und zweiten Behälter 5 miteinander verbindet. Aufgrund der unerwartet geschlossenen Ventile 9d, 9e kann gefolgert werden, dass sich der Eingriff in die Produktionsanlage 1 auf diese Leitung 6 bezieht. Diese Detailinformationen werden aufgezeichnet. Damit ist zu einem späteren Zeitpunkt dokumentierbar,
a) welcher unerwartete Zustand eingetreten ist (die beiden Ventile 9d, 9e waren geschlossen, obwohl dies gemäß dem Steuerprogramm 14 nicht vorgesehen war),
b) auf welche Anlagenteile der unerwartete Zustand Auswirkungen hat/haben kann (anhand des jeweiligen Anlagenkennzeichens der beiden ermittelten Ventile 9d, 9e ergibt sich, dass das erste der beiden Ventile 9d, 9e zum Anlagenteil mit dem zweiten Behälter 5 und das zweite der beiden Ventile 9d, 9e zum Anlagenteil mit dem Reaktor 4 gehört)
c) und welche Anlagenkomponente konkret betroffen ist (anhand der Leitungstopologie, die Informationen über sämtliche Leitungen 6, 7, 8 sowie über untereinander und mit anderen Anlagenkomponenten 9a - 9e bestehende Verbindungen enthält, ergibt sich, dass mit den beiden Ventilen 9d, 9e die Leitung 6 zwischen Reaktor und zweitem Behälter 5 verbunden ist).

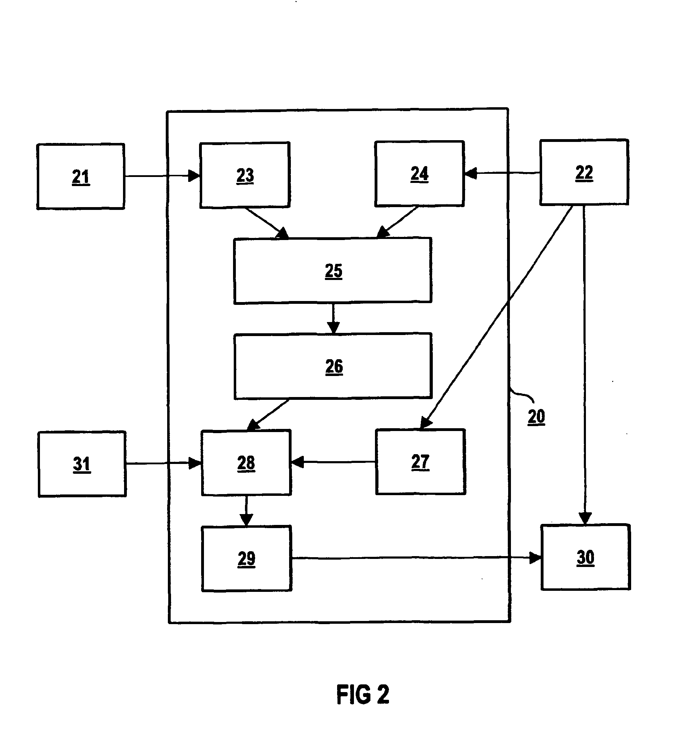

FIG 2 zeigt schematisch ein Blockschaltbild zur Verdeutlichung des Ablaufs des Verfahrens. Einem zentralen Mechanismus 20 zum Erkennen von Eingriffen in eine Produktionsanlage 1 (FIG 1) stehen Daten aus einem Planungswerkzeug 21 und einem Automatisierungswerkzeug 22 zur Verfügung. Das Planungswerkzeug 21 umfasst u.a. Informationen über sämtliche Anlagenteile 3 - 5 sowie sämtliche Anlagenkomponenten 3 - 5, 6 - 8, 9a - 9e. Das Planungstool 21 umfasst weiter die Leitungstopologie mit Informationen über sämtliche Leitungen 6 - 8 sowie untereinander oder zu anderen Anlagenkomponenten 3 - 5, 6 - 8, 9a - 9e bestehende Verbindungen. Das Automatisierungswerkzeug 22 umfasst entweder selbst das Automatisierungssystem 2 (FIG 2) oder bietet einen Zugriff auf das Automatisierungssystem 2.

In einer ersten Funktionskomponente 23 werden Beziehungen zwischen den Anlagenkomponenten 3 - 5, 6 - 8, 9a - 9e und Komponenten des Steuerungsteils der Produktionsanlage 1 (FIG 1) ermittelt. Komponenten des Steuerungsteils sind die Steuerung 10 selbst sowie z. B. Bedienelemente (nicht dargestellt), aber auch solche Anlagenkomponenten 3 - 5, 6 - 8, 9a - 9e, wie z. B. die Ventile 9a - 9e, auf die das Automatisierungssystem 2 (FIG 2) direkt einwirkt. Die erste Funktionskomponente 23 sorgt für eine zumindest logische Verknüpfung z. B. zwischen den sich auf die Ventile 9a - 9e beziehenden Planungsdaten und den sich auf dieselben Ventile 9a - 9e beziehenden Daten des Automatisierungssystems 2. Mit Hilfe einer zweiten Funktionskomponente 24 werden Daten aus dem Automatisierungswerkzeug 22 ausgelesen. Die von erster und zweiter Funktionskomponente 23, 24 gelieferten Daten werden einer Konsistenzprüfung 25 unterzogen. Hier ist auch ein Eingriff eines Benutzers möglich, wenn es zu Problemen bei der Konsistenzprüfung kommt.

Durch eine dritte Funktionskomponente 26 werden zwischen den Anlagenkomponenten 3 - 5, 6 - 8, 9a - 9e Nachbarschaftsbeziehungen ermittelt. Durch die dritte Funktionskomponente 26 ist z. B. ermittelbar, welche Leitung 6 (FIG 1) zwischen Reaktor 4 und zweitem Behälter 5 verläuft und durch welche beiden Ventile 9d, 9e (FIG 1) diese Leitung 6 abriegelbar ist.

Durch eine vierte Funktionskomponente 27 werden Bedienungen der Produktionsanlage 1 erfasst. Die vierte Funktionskomponente 27 liefert damit z. B. diejenigen Daten des Prozessabbilds, anhand derer erkennbar ist, ob ein bestimmtes Ventil 9a - 9e geöffnet oder geschlossen ist.

Damit stehen sämtliche Daten zur Verfügung, die zur Erkennung eines Eingriffs in die Produktionsanlage 1 nötig sind. Die Daten werden einer Regelauswertung 28 zugeführt, die auf vorgegebene, gespeicherte oder durch einen Bediener vorgebbare Regeln sowie ggf. zusätzlich auf eine Regeldatenbank 29 zugreift.

Eine der Regeln, welche durch die Regelauswertung angewendet werden, lautet z. B.: "Wenn zwei Ventile unerwartet (nicht gemäß dem Steuerprogramm) geschlossen sind, gilt dies als Austausch der oder jeder dazwischen liegenden Leitung". Die Regel kann erweitert werden und danach z. B. wie folgt lauten: "Wenn zwei Ventile unerwartet (...) geschlossen sind und zuvor der oder jeder Anlagenteil, zu dem die Ventile jeweils gehören, in Hand- oder Einrichtbetrieb geschaltet wurde, gilt dies als Austausch der oder jeder zwischen den Ventilen liegenden Leitung".

Die Ergebnisse solcher oder ähnlicher Regeln, die für unterschiedlichste Anwendungsfälle nahezu beliebig erweiter- und modifizierbar sind, bezeichnen die erkannten Eingriffe in die Produktionsanlage 1, z. B. "Leitung zwischen Reaktor und zweitem Behälter ausgetauscht; <Datum>, <Uhrzeit>". Solche erkannten Eingriffe werden in einer elektronischen Form eines Änderungshauptbuches 30 eingetragen. Die elektronische Form des Änderungshauptbuches 30 ist z. B. eine Textdatei 30, die auf einem geeigneten Speichermedium, z. B. einer Festplatte eines Steuerungsrechners (nicht dargestellt) gespeichert ist.

Vor der Übernahme erkannter Eingriffe in das Änderungshauptbuch 30 kann durch eine fünfte Funktionskomponente 31 eine Bestätigung durch einen Bediener abgefragt werden. Um Missbrauch zu verhindern, kann zur Bestätigung durch den Bediener eine elektronisch auswertbare Authentifizierung des Bedieners erforderlich sein. Der Eintrag in das Änderungshauptbuch 30 wird dann um Daten hinsichtlich des Bedieners ergänzt.

Eingriffe in den Steuerungsteil der Produktionsanlage können anhand der Daten des Automatisierungswerkzeugs 22 direkt erkannt werden. Daten zu solchen Eingriffen können damit direkt in das Änderungshauptbuch 30 übernommen werden.

Damit lässt sich die Erfindung kurz wie folgt darstellen:
Es wird ein Verfahren zur automatischen Aufzeichnung eines Eingriffes in eine durch ein Steuerprogramm 14 gesteuerte Produktionsanlage 1 mit einer Mehrzahl von Anlagenkomponenten 3, 4, 5, 6, 7, 8, 9a - 9e angegeben. Dabei werden aus dem Steuerprogramm 14, 15 Informationen über einen jeweiligen Zustand der oder jeder Anlagenkomponente 3 - 5, 6 - 8, 9a - 9e entnommen. Weiter werden aus dem Steuerprogramm 14 Informationen darüber entnommen, ob dieser Zustand gemäß dem Steuerprogramm 14 besteht oder erfolgt. Wenn dieser Zustand nicht gemäß dem Steuerprogramm 14 besteht, wird dies als Eingriff in die Produktionsanlage ausgewertet und aufgezeichnet. Ausgestaltungen des Verfahrens betreffen das Ermitteln und Aufzeichnen des oder jedes Anlagenteils 3 - 5 oder der oder jeder Anlagenkomponente 3 - 5, 6 - 8, 9a - 9e, auf den/auf die sich der Eingriff bezieht. Mit diesen Informationen ist die automatische Führung eines Änderungshauptbuches 30 möglich.

## Patentansprüche

1. Verfahren zur automatischen Aufzeichnung eines Eingriffes in eine durch ein Steuerprogramm (14) gesteuerte Produktionsanlage (1) mit einer Mehrzahl von Anlagenkomponenten (3, 4, 5, 6, 7, 8, 9a - 9e),
**dadurch gekennzeichnet,**
a) **dass** aus dem Steuerprogramm (14, 15) Informationen über einen jeweiligen Zustand der oder jeder Anlagenkomponente (3 - 5, 6 - 8, 9a - 9e) entnommen werden,
b) **dass** zur Ermittlung eines unerwarteten Zustands aus dem Steuerprogramm (14) weiter Informationen darüber entnommen werden, ob dieser Zustand gemäß dem Steuerprogramm besteht,
c) **dass** dieser Zustand aufgezeichnet wird, wenn dieser Zustand nicht gemäß dem Steuerprogramm besteht, und
d) **dass** die von dem unerwarteten Zustand betroffene Anlagenkomponente aufgezeichnet wird.

2. Verfahren nach Anspruch 1, wobei
- durch einen insbesondere kontinuierlichen Produktionsprozess aus mindestens einem Ausgangsstoff zumindest ein Produkt erzeugt wird,
- zur Erzeugung des Produktes der oder jeder Ausgangsstoff durch zumindest eine Leitung (6 - 8) mit jeweils einem insbesondere abriegelbaren, vorderen und hinteren Knotenpunkt (6', 6", 7', 7", 8', 8") geleitet wird,
- die oder jede Leitung (6 - 8) an einem oder jedem Knotenpunkt (6' - 8', 6" - 8") mit zumindest einer anderen Anlagenkomponente (3 - 5, 6 - 8, 9a - 9e) zusammentrifft,
- eine Leitungstopologie Informationen über jede Leitung (6 - 8) und deren Verbindung mit weiteren Anlagenkomponenten (3 - 5, 6 - 8, 9a - 9e) enthält und
- aus dem Steuerprogramm (14) Informationen darüber entnommen werden, welcher Knotenpunkt (6' - 8', 6" - 8") zu welchem Zeitpunkt abgeriegelt ist, und
- aus dem Steuerprogramm (14) weiter Informationen darüber entnommen werden, ob diese Abriegelung gemäß dem Steuerprogramm (14) besteht.

3. Verfahren nach Anspruch 2, wobei ein unerwartetes Sperren zumindest zweier Knotenpunkte (6' - 8', 6" - 8") als Austausch der oder jeder dazwischen liegenden Leitung (6 - 8) ausgewertet und entsprechend aufgezeichnet wird.

4. Verfahren nach Anspruch 3, wobei eine unerwartete Deaktivierung eines Anlagenteils (3 - 5), zu dem der oder jeder gesperrte Knotenpunkt (6' - 8', 6" - 8") und/oder die oder jede dazwischen liegende Leitung (6 - 8) gehört, aufgezeichnet wird.

5. Verfahren nach Anspruch 2, 3 oder 4, wobei
- mit zumindest einer Leitung (6 - 8) ein Fördermittel kombiniert ist und
- ein unerwartetes Sperren zweier die Leitung (6 - 8) mit dem Fördermittel einschließender Knotenpunkte (6' - 8', 6" - 8") als Austausch des Fördermittels und/oder der mit dem Fördermittel kombinierten Leitung (6 - 8) ausgewertet und/oder entsprechend aufgezeichnet wird.

6. Verfahren nach Anspruch 2, 3 oder 4, wobei
- für zumindest eine Leitung (6 - 8) eine Reinigung veranlasst werden kann und
- eine unerwartete Reinigung einer Leitung (6 - 8) als zuvor erfolgter Austausch der Leitung (6 - 8) ausgewertet und/oder entsprechend aufgezeichnet wird.

7. Verfahren nach Anspruch 2, 3 oder 4, wobei
- für zumindest eine Leitung (6 - 8) eine Druckprüfung veranlasst werden kann und
- eine unerwartete Druckprüfung einer Leitung (6 - 8) als zuvor erfolgter Austausch der Leitung (6 - 8) ausgewertet und/oder entsprechend aufgezeichnet wird.

8. Verfahren nach einem der Ansprüche 3 bis 7, wobei das Aufzeichnen erst erfolgt, wenn vorher eine Fehler- oder Wartungsmeldung ausgelöst war.

## Claims

1. Method for automatically recording an intervention in a production plant (1) which is controlled by a control program (14) and has a plurality of plant components (3, 4, 5, 6, 7, 8, 9a-9e),
**characterized**
a) **in that** information relating to a respective state of the or each plant component (3-5, 6-8, 9a-9e) is gathered from the control program (14, 15),
b) **in that**, in order to determine an unexpected state, information relating to whether this state exists according to the control program is also gathered from the control program (14),
c) **in that** this state is recorded if this state does not exist according to the control program, and
d) **in that** the plant component affected by the unexpected state is recorded.

2. Method according to Claim 1, wherein
- at least one product is produced from at least one starting material by means of a production process, in particular a continuous production process,
- in order to produce the product, the or each starting material is guided through at least one line (6-8) with a respective front and rear, in particular lockable, node (6', 6", 7', 7", 8", 8"),
- the or each line (6-8) meets at least one other plant component (3-5, 6-8, 9a-9e) at a or each node (6'-8', 6"-8"),
- a line topology contains information relating to each line (6-8) and its connection to further plant components (3-5, 6-8, 9a-9e), and
- information relating to which node (6'-8', 6"-8") is locked at which time is gathered from the control program (14), and
- information relating to whether this locking exists according to the control program (14) is also gathered from the control program (14).

3. Method according to Claim 2, wherein unexpected blocking of at least two nodes (6'-8', 6"-8") is evaluated and accordingly recorded as replacement of the or each line (6-8) in between.

4. Method according to Claim 3, wherein unexpected deactivation of a plant part (3-5), to which the or each blocked node (6'-8', 6"-8") and/or the or each line (6-8) in between belong(s), is recorded.

5. Method according to Claim 2, 3 or 4, wherein
- a conveying means is combined with at least one line (6-8), and
- unexpected blocking of two nodes (6'-8', 6"-8") which include the line (6-8) with the conveying means is evaluated and/or accordingly recorded as replacement of the conveying means and/or of the line (6-8) combined with the conveying means.

6. Method according to Claim 2, 3 or 4, wherein
- cleaning can be initiated for at least one line (6-8), and
- unexpected cleaning of a line (6-8) is evaluated and/or accordingly recorded as previous replacement of the line (6-8).

7. Method according to Claim 2, 3 or 4, wherein
- a pressure test can be initiated for at least one line (6-8), and
- an unexpected pressure test on a line (6-8) is evaluated and/or accordingly recorded as previous replacement of the line (6-8).

8. Method according to one of Claims 3 to 7, wherein the recording is carried out only when a fault message or maintenance message has previously been triggered.

## Revendications

1. Procédé d'enregistrement automatique d'une intervention dans une installation ( 1 ) de production commandée par un programme ( 14 ) de commande et ayant une multiplicité de composants ( 3, 4, 5, 6, 7, 8, 9a à 9e ) d'installation, **caractérisé**
a) **en ce que** l'on prélève du programme ( 14, 15 ) de commande des informations sur un état respectif du ou de chaque composant ( 3, 4, 5, 6, 7, 8, 9a à 9e ) d'installation,
b) **en ce que** l'on prélève, pour la détermination d'un état inattendu du programme ( 14 ) de commande, d'autres informations sur le point de savoir si cet état existe conformément au programme de commande,
c) **en ce que** l'on enregistre cet état, si cet état n'existe pas conformément au programme de commande, et
d) **en ce que** l'on enregistre les composants d'installation concernés par l'état inattendu.

2. Procédé suivant la revendication 1, dans lequel
- on produit au moins un produit à partir d'au moins une matière première par une opération de production, notamment continue,
- pour la production du produit, on envoie la ou chaque matière première dans au moins un conduit ( 6 à 8 ) ayant respectivement un point ( 6', 6", 7', 7", 8', 8" ) nodal avant et arrière pouvant notamment être fermé,
- le ou chaque conduit ( 6 à 8 ) rencontre en un ou en chaque point ( 6' à 8', 6" à 8" ) nodal au moins un autre composant ( 3 à 5, 6 à 8, 9a à 9e ) d'installation,
- une topologie de conduit contient des informations sur chaque conduit ( 6 à 8 ) et leur liaison avec d'autres composants ( 3 à 5, 6 à 8, 9a à 9e ) d'installation, et
- on prélève du programme ( 14 ) de commande des informations sur le point de savoir quel point ( 6' à 8', 6" à 8" ) nodal à quel instant est fermé, et
- on prélève du programme ( 14 ) de commande d'autres informations sur le point de savoir si cette fermeture existe conformément au programme ( 14 ) de commande.

3. Procédé suivant la revendication 2, dans lequel on évalue, comme étant un remplacement du ou de chaque conduit ( 6 à 8 ) se trouvant entre eux, une fermeture inattendue d'au moins deux points ( 6' à 8', 6" à 8" ) et on l'enregistre en conséquence.

4. Procédé suivant la revendication 3, dans lequel on enregistre une désactivation inattendue d'une partie ( 3 à 5 ) d'installation à laquelle le ou chaque point ( 6' à 8', 6" à 8" ) nodal fermé et/le ou chaque conduit ( 6 à 8 ) se trouvant entre eux appartient.

5. Procédé suivant la revendication 2, 3 ou 4, dans lequel
- on combine un moyen de transport à au moins un conduit ( 6 à 8 ) et
- on évalue, comme un remplacement du moyen de transport et/ou du conduit ( 6 à 8 ) combiné au moyen de transport, une fermeture inattendue de deux points ( 6' à 8', 6" à 8" ) nodaux incluant le conduit ( 6 à 8 ) avec le moyen de transport.

6. Procédé suivant la revendication 2, 3 ou 4, dans lequel
- on provoque un nettoyage d'au moins un conduit ( 6 à 8 ) et
- on évalue, comme un remplacement effectué précédemment du conduit ( 6 à 8 ), un nettoyage inattendu d'un conduit ( 6 à 8 ) et/ou on l'enregistre en conséquence.

7. Procédé suivant la revendication 2, 3 ou 4, dans lequel
- on peut provoquer un contrôle de pression d'au moins un conduit ( 6 à 8 ) et
- on évalue, comme un remplacement effectué auparavant du conduit ( 6 à 8 ), un contrôle de pression inattendu d'un conduit ( 6 à 8 ) et/ou on l'enregistre en conséquence.

8. Procédé suivant l'une des revendications 3 à 7, dans lequel on effectue l'enregistrement que, si auparavant, un message d'erreur ou d'avertissement a été déclenché.
